Europäisches Patentamt

European Patent Office

Office européen des brevets

(19)

(11) EP 1 296 493 A2

(12) EUROPEAN PATENT APPLICATION

(43) Date of publication:
26.03.2003 Bulletin 2003/13

(51) Int Cl.7: H04L 27/26

(21) Application number: 01128642.4

(22) Date of filing: 30.11.2001

(84) Designated Contracting States:
AT BE CH CY DE DK ES FI FR GB GR IE IT LI LU
MC NL PT SE TR
Designated Extension States:
AL LT LV MK RO SI

(30) Priority: 19.09.2001 KR 2001057915

(71) Applicant: Electronics and Telecommunications
Research Institute
Taejon (KR)

(72) Inventors:
• Park, So Ra
Kangnam-Gu, Seoul (KR)

• Lee, Soo In
Yusong-Gu, Taejon (KR)
• Yang, Gyu Tae
Yusong-Gu, Taejon (KR)
• Jeong, Young Ho
Yusong-Gu, Taejon (KR)
• Lee, Hyun
416-5 Yongsan-Dong, Dalseo-Gu, Taegu (KR)
• Kim, Geon
Yusong-Gu, Taejon (KR)

(74) Representative: Betten & Resch
Patentanwälte,
Theatinerstrasse 8
80333 München (DE)

(54) **Symbol synchronisation in a multicarrier receiver**

(57) An apparatus for synchronizing a symbol in an OFDM receiver and a method thereof are disclosed. The apparatus includes a signal magnitude calculator for calculating a magnitude of an applied input complex signal; a first delay unit for delaying a signal received from the signal magnitude calculator during $T_u$; a first adding unit for gaining a difference value for the magnitude between the signal delayed by the first delay unit and the input complex signal; an absolute value calculator for gaining an absolute value of the signal received from the first adding unit; a second delay unit for delaying the signal received from the absolute value calculator during a minimum $T_g$; a second adding unit for obtaining a difference value of the signals respectively received from the second delay unit and the absolute value calculator; a moving window sum unit for calculating sum of the signals received from the second adding unit during the minimum $T_g$; a searching unit for comparing values of the accumulating unit during $T_u$ and a maximum $T_g$, and searching for a predetermined point; and a guard interval removing unit for removing the guard interval by using the searched position.

FIG. 6

EP 1 296 493 A2

**Description**

Field of the Invention

The present invention relates to an apparatus for synchronizing a symbol in an orthogonal frequency division multiplexing (hereinafter, referred to as 'OFDM') receiver and a method thereof; and, more particularly, to an apparatus for synchronizing a symbol in an OFDM system and a method thereof, for finding out a start point of useful OFDM symbols provided for the sake of a fast fourier transform (hereinafter, referred to as 'FFT') which is used for a demodulation in a receiver of an OFDM system.

Prior Art of the Invention

An OFDM can be defined as a form of multi-carrier modulations. The OFDM has been applied to many of digital transmission systems such as digital audio broadcasting (DAB), digital video broadcasting terrestrial (DVB-T) TV, and wireless LANs. In OFDM system, each sub-carrier is orthogonal to all other sub-carriers and modulated with fixed signal alphabets. Guard interval is inserted between OFDM symbols to avoid inter-symbol interference (ISI) caused by multi-path distortion whose impulse responses are shorter than the cyclic prefix length. The estimation of the frame start position determines the alignment of the FFT window in the receiver with the useful portion of the OFDM symbol.

The symbol synchronization offset induces ISI (Intersymbol Interference) and the linear phase rotations of FFT outputs in proportion to the magnitude of sub-carrier frequency. An OFDM receiver has to detect the type of guard interval and finds the symbol start position. But in the first system stage, receiver has priori knowledge about the duration of the guard interval and symbol start position.

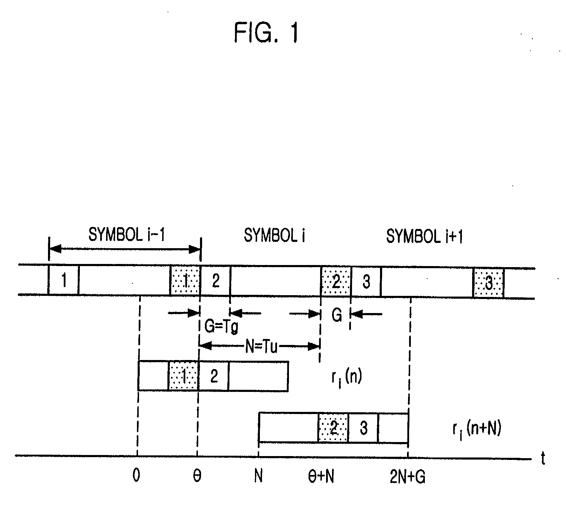

Fig. 1 is a graph representing an OFDM symbol characteristic in a time domain of an OFDM receiver. An OFDM signal having a guard interval, wherein the duration of the guard interval is represented by $T_g$ and the duration of the useful OFDM symbols is represented by $T_u$. Also, the duration of the guard interval is equal to a part of $T_u$.

In an OFDM symbol synchronization algorithm, the following equations (1) and (2) respectively represent a maximum likelihood (hereinafter, referred to as 'ML') algorithm which uses a correlation value between the guard interval and the original useful OFDM symbols and a minimum error (hereinafter, referred to as 'ME') algorithm which uses a difference between the guard interval and the original useful OFDM symbols value.

$$Max\left[\sum_{k=\theta}^{\theta+C-1}Corr(n+k),\gamma(n+k+N)\right] \quad \text{n=0,1, } \bullet\bullet\bullet \text{ N+G-1} \quad \text{Eq. (1)}$$

$$Max\left[\sum_{k=\theta}^{\theta+C-1}Sub\{\gamma(n+k),\gamma(n+k+N)\}\right] \quad \text{n=0,1, } \bullet\bullet\bullet\text{N+G-1} \quad \text{Eq. (2)}$$

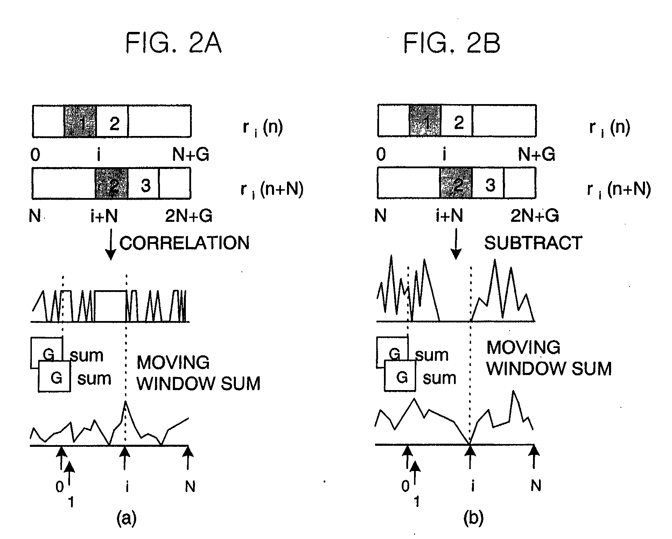

Fig. 2A is a concept diagram for an OFDM symbol synchronization using the ML algorithm, and Fig. 2B is a concept diagram for the OFDM symbol synchronization using the ME algorithm.

The ML algorithm and the ME algorithm are based on the concept that the guard-interval is a cyclic continuation of the useful part and is inserted before the symbol.

As shown in the drawings, it can be known that a correlation characteristic between the input signal and the signal delayed during $T_u$, and a characteristic for a value difference between the input signal and the signal delayed during $T_u$, are utilized.

While, as the OFDM symbol synchronization precedes to a frequency synchronization, the OFDM symbol synchronization should be valid under such a state that a carrier frequency offset exists remain in the OFDM receiver. However, by the above provided algorithm the OFDM symbol synchronization is impossible in case that the frequency offset such as a carrier frequency offset or a sampling frequency offset etc. exists remain.

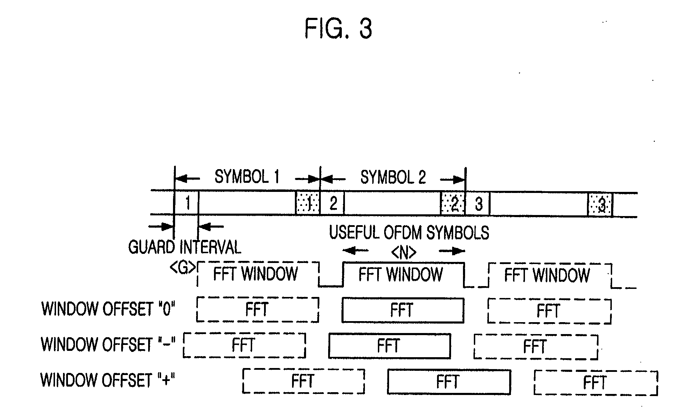

Fig. 3 is a concept diagram for the OFDM symbol synchronization provided in cases that a window offset exists and does not exist in the OFDM receiver. One OFDM symbol indicates the N number of samples as block data provided after performing an IFFT modulation by using the N number of parallel data. The guard-interval is a cyclic continuation of the useful part and is inserted before the symbol.

The OFDM symbol synchronization is provided to eliminate the guard interval in order for an exact demodulation in the receiver system and to detect the N number of samples as the original signal.

As shown in the drawing, in case there is a symbol synchronization error or an FFT window positional restoration error, that is, in case there exists a window offset, it can be known that an OFDM demodulation is impossible.

As a prior art to lessen such frequency offset influence, it is disclosed 'FFT window positional restoration apparatus and method thereof in OFDM system receiver' in Patent No. 1999-0234329.

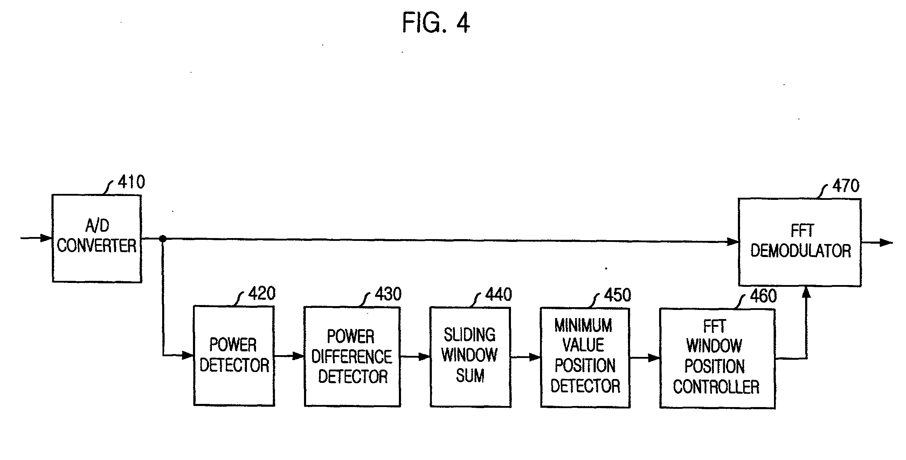

Fig. 4 represents a block diagram showing an FFT window positional restoration apparatus of a conventional OFDM receiver, and this is disclosed in the Patent No. 1999-0234329.

As shown in the drawing, the conventional FFT window positional restoration apparatus converts a received OFDM signal into a digital complex sample, and detects, as a starting portion of the symbol, a position where an absolute value for a difference of electric power value between the samples becomes minimum, and restores an FFT window position by the detected symbol start information, to thus activate an FFT.

However, since the conventional FFT window positional restoration apparatus should use a multiplier in case that a power detector 120 calculates electric power, a complication extent of the system is increased and a computing speed drops.

Further, in the OFDM receiver, it should be known an exact length of the guard interval before applying the algorithm for such OFDM symbol synchronization.

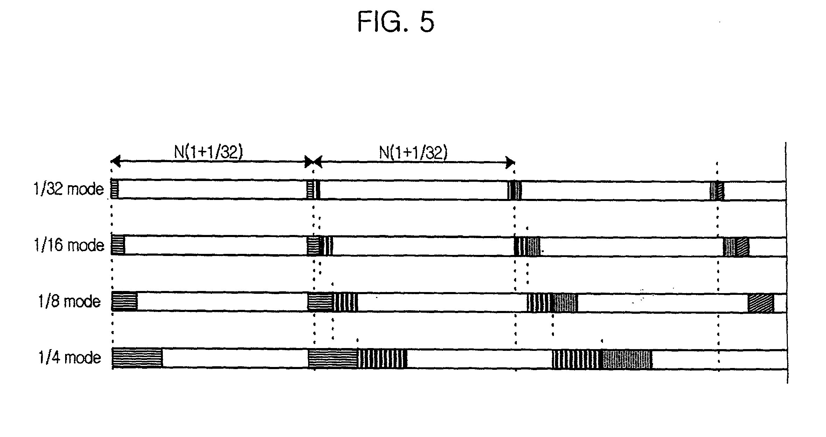

Fig. 5 is a graph showing four values of guard intervals in DVB-T standard.

Therefore, there is a problem that a preceding procedure such as the guard interval sort detection should be performed before the symbol synchronization, in the system such as the DVB-T in which there are several kinds of guard intervals used in the transmission.

Summary of the Invention

Therefore, it is an object of the present invention to provide an apparatus for a symbol synchronization in an OFDM receiver, in which an FFT window positional restoration can be effectively gotten regardless of a sort of guard intervals, with a simplified systematic embodiment, in an OFDM symbol synchronization system which stably operates even in case that there exists a frequency offset.

Another object of the present invention is to provide a method for a symbol synchronization in an OFDM receiver, in which an FFT window positional restoration can be effectively gained regardless of a sort of guard intervals, with a simplified systematic embodiment, in an OFDM symbol synchronization system which stably operates even in case that there exists a frequency offset.

A still another object of the present invention is to provide a record medium capable of being read through a computer having a recording of a program which is provided to realize a function of obtaining an FFT window positional restoration regardless of a sort of guard intervals with a simplified systematic embodiment, in an OFDM symbol synchronization system which stably operates even in case that there exists a frequency offset.

In accordance with an aspect of the present invention, there is provided an apparatus for synchronizing a symbol of an OFDM (orthogonal frequency division multiplexing) receiver, in which an FFT window position of an OFDM system is restored, the apparatus including: a signal magnitude calculator for calculating a magnitude of an applied input complex signal; a first delay unit for delaying a signal received from the signal magnitude calculator during a duration of a useful OFDM symbol $T_u$; a first adding unit for gaining a difference value for the magnitude between the signal delayed by the first delay unit and the input complex signal; an absolute value calculator for gaining an absolute value of the signal received from the first adding unit; a second delay unit for delaying the signal received from the absolute value calculator during a duration of a minimum guard interval $T_g$; a second adding unit for obtaining a difference value of the signals respectively received from the second delay unit and the absolute value calculator; a moving window sum unit for calculating sum of the signals received from the second adding unit during the minimum $T_g$; a searching unit for comparing values of the accumulating unit during $T_u$ and a maximum $T_g$, and searching for a predetermined point; and a guard interval removing unit for removing the guard interval by using the searched position.

In accordance with another aspect of the present invention, there is provided an apparatus for synchronizing a symbol of an OFDM (orthogonal frequency division multiplexing) receiver, in which an FFT window position of an OFDM system is restored, the apparatus including: a first delay unit for delaying an applied input complex signal during a duration of a useful OFDM symbol $T_u$; a correlation value calculator for gaining a correlation value between signals respectively received from the first delay unit and the input complex signal; a second delay unit for delaying the signal received from the correlation value calculator during a duration of a minimum guard interval $T_g$; an adding unit for gaining a difference value of the signals respectively received from the second delay unit and the correlation value calculator; a moving window sum unit for accumulating the signals received from the adding unit during the minimum $T_g$; a searching unit for comparing values of the moving window sum unit during the useful OFDM symbols interval and a maximum $T_g$, and searching for a predetermined point; and a guard interval removing unit for removing a guard interval by using the searched position.

In accordance with further another aspect of the present invention, there is provided a method for synchronizing a symbol in an OFDM (orthogonal frequency division multiplexing) receiver, in which an FFT window position of an OFDM system is restored, the method including the steps of: a) performing a calculation for the magnitude of an applied input complex signal; b) delaying the signal calculated in the step a) during a duration of a useful OFDM symbol $T_u$; c) gaining a difference value between the magnitude of the signal delayed in the step b) and the input signal, and obtaining its absolute value; d) delaying the absolute value during a duration of a minimum guard interval $T_g$; e) obtaining a difference value between the signal delayed in the step d) and the absolute value; f) calculating sum of the difference values during the minimum $T_g$; g) comparing the values of sum during $T_u$ and a maximum $T_g$, and searching for a predetermined point; and h) removing the guard interval by using the searched position.

In accordance with further another aspect of the present invention, there is provided a method for synchronizing a symbol in an OFDM (orthogonal frequency division multiplexing) receiver, in which an FFT window position of an OFDM system is restored, the method including the steps of: a) delaying an applied input complex signal during $T_u$; b) gaining a correlation value between the signal generated in the first step and the input complex signal; c) delaying the correlation value during a minimum guard interval $T_g$; d) gaining a difference value between the signal delayed in the third step and the correlation value; e) calculating sum of the difference values during the minimum guard interval $T_g$; f) comparing the values of sum during $T_u$ and the maximum guard interval $T_g$, and searching for a predetermined point; and g) removing the guard interval by using the searched position.

In accordance with still further another aspect of the present invention, there is provided a computer readable recording medium storing instructions for executing a method for synchronizing a symbol in an OFDM (orthogonal frequency division multiplexing) symbol synchronization apparatus to restore an FFT window position of an OFDM system, the OFDM symbol synchronization apparatus having a microprocessor, the method including the steps of: a) performing a calculation for the magnitude of an applied input complex signal; b) delaying the signal calculated in the step a) during a duration of a useful OFDM symbol $T_u$; c) gaining a difference value between the magnitude of the signal delayed in the step b) and the input signal, and obtaining its absolute value; d) delaying the absolute value during a duration of a minimum guard interval $T_g$; e) obtaining a difference value between the signal delayed in the step d) and the absolute value; f) calculating sum of the difference values during the minimum $T_g$; g) comparing the values of sum during $T_u$ and maximum $T_g$, and searching for a predetermined point; and h) removing the guard interval by using the searched position.

In accordance with yet further another aspect of the present invention, there is provided a computer readable recording medium storing instructions for executing a method for synchronizing a symbol in an OFDM (orthogonal frequency division multiplexing) symbol synchronization apparatus to restore an FFT window position of an OFDM system, the OFDM symbol synchronization apparatus having a microprocessor, the method including the steps of: a) delaying an applied input complex signal during $T_u$; b) gaining a correlation value between the signal generated in the first step and the input complex signal; c) delaying the correlation value during a minimum guard interval $T_g$; d) gaining a difference value between the signal delayed in the third step and the correlation value; e) calculating sum of the difference values during minimum guard interval $T_g$; f) comparing the values of sum during $T_u$ and the maximum guard interval $T_g$, and searching for a predetermined point; and g) removing the guard interval by using the searched position.

Brief Description of the Drawings

The above and other objects and features of the instant invention will become apparent from the following description of preferred embodiments taken in conjunction with the accompanying drawings, in which:

Fig. 1 is an OFDM symbol timing diagram of an OFDM receiver ;
Fig. 2A is a concept diagram for an OFDM symbol synchronization using an ML algorithm in a OFDM system;
Fig. 2B represents a concept diagram for an OFDM symbol synchronization using an ME algorithm in a OFDM system;
Fig. 3 indicates a concept diagram for an OFDM symbol synchronization provided in cases that a window offset exists and does not exist in an OFDM receiver ;
Fig. 4 illustrates a block diagram showing an FFT window positional restoration apparatus in a conventional OFDM receiver;
Fig. 5 is a graph showing various sorts of guard intervals in DVB-T system;
Fig. 6 is a block diagram in one embodiment of an OFDM symbol synchronization apparatus in an inventive OFDM receiver;
Fig. 7 depicts a block diagram of a signal magnitude calculator in a conventional OFDM receiver;
Fig. 8 shows a block diagram in one embodiment of a signal magnitude calculator in an inventive OFDM symbol synchronization apparatus;

Fig. 9 provides a block diagram in another embodiment of a signal magnitude calculator in an inventive OFDM symbol synchronization apparatus;

Fig. 10 represents a graph of one embodiment for an output of each block shown in Fig. 6;

Fig. 11 is a block diagram in a still another embodiment of an OFDM symbol synchronization apparatus in an inventive OFDM receiver;

Fig. 12 is a graph of one embodiment showing an output of each block shown in Fig. 11;

Fig. 13 is a graph of one embodiment provided by comparing an inventive OFDM symbol synchronization method and a conventional OFDM symbol synchronization method under such a state that it is not known a sort of guard intervals;

Fig. 14 represents a graph of one embodiment provided by comparing an inventive OFDM symbol synchronization method and an OFDM symbol synchronization method using an absolute value of an electricity difference; and

Fig. 15 indicates a graph of one embodiment provided by comparing an inventive OFDM symbol synchronization method and a conventional OFDM symbol synchronization method having an influence of frequency offset under such a state that a relative frequency offset for a subcarrier spacing exists remain.

Preferred Embodiment of the Invention

Hereinafter, preferred embodiments of the present invention will be described in detail with reference to the accompanying drawings.

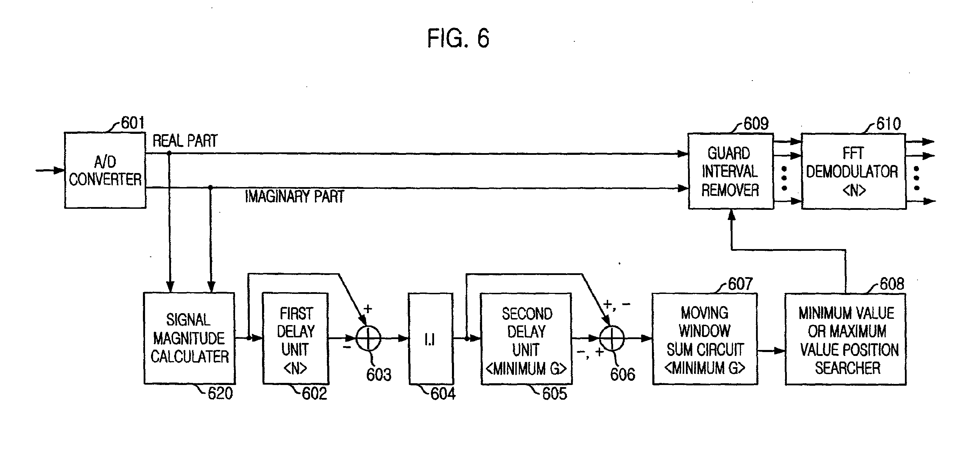

Fig. 6 is a block diagram in one embodiment of an OFDM symbol synchronization apparatus in an inventive OFDM receiver.

As shown in the drawing, in accordance with the present invention, an apparatus for a symbol synchronization in an OFDM receiver includes an analog digital converter 601, a signal magnitude calculator 620, first delay unit 602, an adder 603, an absolute value calculator 604, second delay unit 605, an adder 606, moving window sum unit 607, a minimum value or maximum value point searcher 608, a guard interval remover, and a FFT circuit 610.

The analog digital converter 601 takes charge of a function of converting an analog signal received as an input signal into a digital complex signal, and the signal magnitude calculator 620 takes charge of a function of calculating the magnitude of the converted digital signal.

The signal magnitude calculator 620 will be able to be applied to all algorithms which use the magnitude of the signal in order to utilize a concept of Fig. 2B.

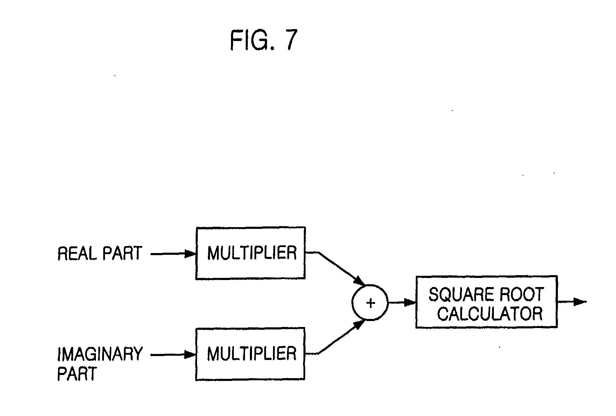

A conventional technique for the signal magnitude calculator 620 will be first described as follows, referring to Fig. 7, and then, embodiments of the present invention will be described.

Fig. 7 depicts a block diagram of the signal magnitude calculator in a conventional OFDM receiver.

As shown in the drawing, the conventional signal magnitude calculator is constructed by a multiplier and a square root calculator, and respectively calculates square values of a real part and an imaginary part of an input signal, and adds its values to obtain the square root, and to thereby get the exact magnitude of the signal.

However, in embodying by hardware the conventional signal magnitude calculator, the multiplier and the square root calculator are used, to thus increase a complication extent of the system and cause a problem such as a drop of a computation speed.

Further, since information of the signal necessary for the OFDM symbol synchronization is not the exact magnitude of the input signal, but a point that the last portion G number of samples in useful OFDM symbols and the G number of samples in a guard interval are the same signal, it will be valid a method using the schematic magnitude of the input signal.

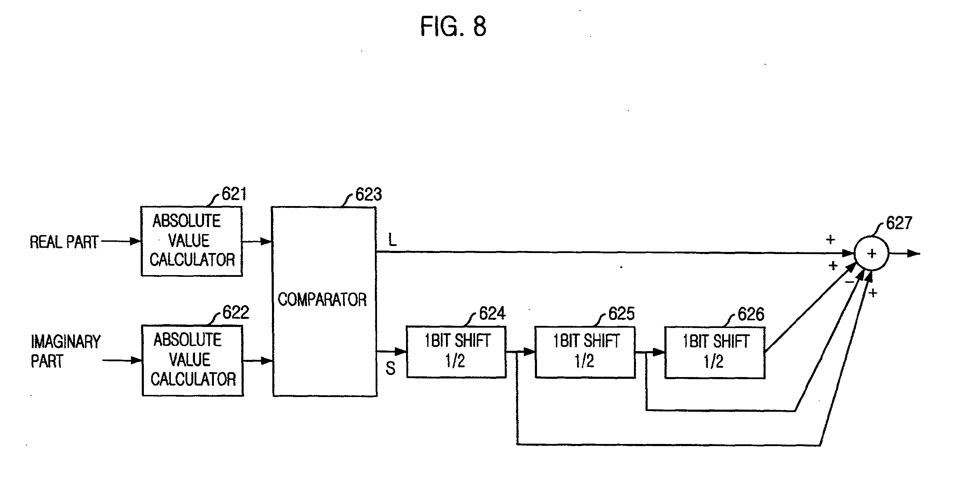

Fig. 8 is a block diagram in one embodiment of the signal magnitude calculator in the inventive OFDM symbol synchronization apparatus.

In an LS algorithm, it is used that the magnitude of the input signal is actually same as the following equation (3) when a great signal among respective absolute values of the real part and the imaginary part is the $L$, and a small signal is the $S$.

$$I(n) = |y(n)| = L + 0.4 \times S \qquad \text{Eq. (3)}$$

Herewith, $I(n)$ represents the magnitude of the signal, and $y(n)$ indicates a complex signal converted into a digital.

In embodying this algorithm by hardware, three of 1bit shift can be utilized.

As shown in the drawing, the signal magnitude calculator 620 in the inventive OFDM symbol synchronization apparatus includes absolute value calculators 621, 622, a comparator 623, 1bit shift 624, 625, 626, and an adder 627.

The absolute value calculator 621, 622 has a function of gaining respective absolute values of the real part and the imaginary part of an applied complex signal, and the comparator 623 has a function of comparing the magnitude of two signals which are passed through the absolute value calculators 621, 622, and of dividing it into *L* and *S* signals.

Three of 1bit shifts 624, 625, 626 have a function of reducing the *S* signal by $\frac{1}{2}, \frac{1}{4}, \frac{1}{8}$ individually, and the adder 627 individually adds the *L* signal and signals which are passed through the 1bit shifts 624, 626, and also has a function of subtracting signals passed through the 1bit shift 625.

Such algorithm can be represented as the following equation (4).

$$I(n) = |y(n)| = L + (0.5 \times S) - (0.25 \times S) + (0.125 \times S) \qquad \text{Eq. (4)}$$

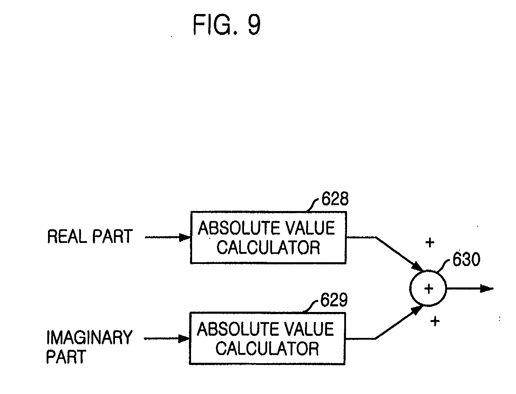

Fig. 9 shows a block diagram in another embodiment of the signal magnitude calculator in the inventive OFDM symbol synchronization apparatus.

As shown in the drawing, the signal magnitude calculator 620 of the inventive OFDM symbol synchronization apparatus includes absolute value calculators 628, 629 and an adder 630.

The absolute value calculators 621, 622 performs a function of gaining respective absolute values of the real part and the imaginary part of an applied complex signal, and the adder 630 performs a function of adding up the magnitude of the absolute values from the real part and the imaginary part of a complex signal detected by the absolute value calculators 628, 629.

This can be represented as the following equation (5).

$$I(n) = |Re(n)| + |Im(n)| \qquad \text{Eq. (5)}$$

Herewith, Re(*n*) represents the real part of the complex signal, and Im(*n*) indicates the imaginary part of the complex signal.

The first delay unit 602 performs a function of delaying the magnitude of the input signal Im(*n*) calculated in the signal magnitude calculator 620 during T$_u$, and the adder 1 (603) performs a function of gaining a difference between the signal delayed in the first delay unit 602 and *I(n)*.

Further, the absolute value calculator 604 has a function of obtaining d(n) as an absolute value of a value for the signal received from the first adder 603.

This can be represented as the following equation (6).

$$d(n) = |I(n) - (n + N)| \qquad \text{Eq. (6)}$$

The second delay unit 605 has a function of delaying *d(n)* received from the absolute value calculator 604 during minimum T$_g$, and the second adder 606 performs a function of gaining a difference between *d(n+N)* as a signal received from the second delay unit 605 and *d(n)*.

The moving window sum unit 607 calculates sum of the signals received from the second adder 606 during minimum T$_g$.

The minimum value or maximum value point searcher 608 can use a comparator in order to search the minimum value or the maximum value among the values of sum in the moving window sum unit 607, and performs a function of comparing values of the moving window sum unit 607 during T$_u$ and maximum T$_g$, and of searching a point where the minimum value or the maximum value is represented. This can be represented as the following equation (7) for the minimum value and as the following equation (8) for the maximum value.

$$Min\left[ \sum_{k=\theta}^{\theta+C-1} \{d(n+k) - d(n+k+N)\} \right] \quad \text{n=0,1, } \bullet\bullet\bullet \text{ N+G-1} \qquad \text{Eq. (7)}$$

$$Max\left[ \sum_{k=\theta}^{\theta+C-1} \{d(n+k+N) - d(n+k)\} \right] \quad \text{n=0,1, } \bullet\bullet\bullet \text{ N+G-1} \qquad \text{Eq. (8)}$$

Such method is repeatedly performed over two times, and a mean for such obtained OFDM symbol synchronization values is computed, to thus estimate its position.

The guard interval remover 609 performs a function of inputting a signal corresponding to $T_u$, the signal being provided from a signal preceding by minimum $T_g$, to the FFT circuit 610, at a point of the minimum value or the maximum value searched in the minimum or maximum value point searcher 608.

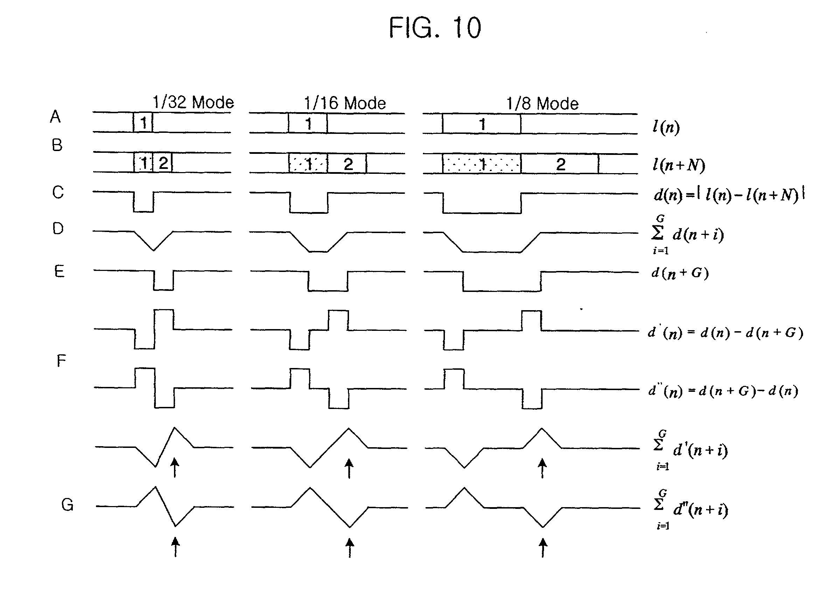

Fig. 10 is a graph of one embodiment for an output of each block shown in Fig. 6.

In the conventional OFDM system, a length of a guard interval should be known in advance in all methods for the symbol synchronization. If a size of the guard interval transmitted in the receiver system is not known previously, there is a problem that an exactness in the symbol synchronization remarkably falls since a use signal characteristic in the algorithm using a signal difference among symbol synchronization algorithms using a signal coincidence between $T_u$ and maximum $T_g$ becomes D shown in Fig. 10. Further, even though a start point was found out, there is a problem that the guard interval cannot be removed if it cannot be known a sort of the guard interval.

Therefore, the symbol synchronization methods up to now cannot be used in the system having several kinds of guard intervals. However, if utilizing G of Fig. 10, it will be valid the symbol synchronization even though only a length of the minimum guard interval in the system is known.

As shown in the drawing, "A" represents an output of the signal magnitude calculator 620, and "B" indicates an output of the first delay unit 602.

"C" indicates an output of the absolute value calculator 604, and "D" represents an output of a conventional guard interval accumulator using an output of the absolute value calculator 604 when it is provided information of the minimum guard interval length at a systematic initiation under a state that a sort of the guard interval is not known. As shown in the drawing, it can be known that the exact symbol synchronization is impossible.

"E" represents an output of the second delay unit 605 and "F" indicates an output of the adder 606.

"G" provides an output of the moving window sum unit 607. In a case of using $d'(n)$, the maximum value detector is used in the minimum or maximum value point searcher 608, and in a case of using $d'(n)$, the minimum value detector is used therein.

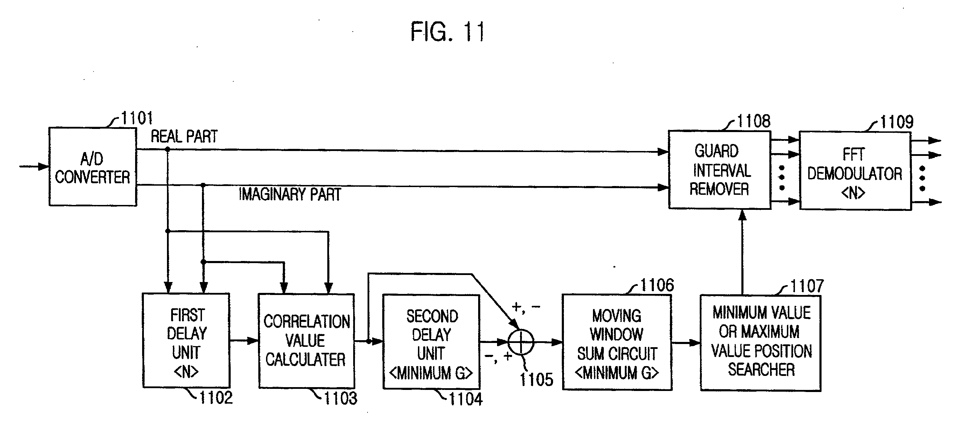

Fig. 11 is a block diagram in a still another embodiment of the OFDM symbol synchronization apparatus in the inventive OFDM receiver.

As shown in the drawing, the inventive OFDM symbol synchronization apparatus includes an analog digital converter 1101, the first delay unit 1102, a correlation value calculator 1103, a second delay unit 1104, an adder 1105, a moving window sum unit 1106, a minimum value or maximum value point searcher 1107, a guard interval remover 1108, and a FFT circuit 1109.

The analog digital converter 1101 performs a function of converting an analog signal received as an input signal into a digital complex signal, and the first delay unit 1102 has a function of delaying the signal received from the analog digital converter 1101 by $T_u$.

The correlation value calculator 1103 has a function of gaining c(n) as a correlation value of signals respectively received from the analog digital converter 1101 and the first delay unit 1102, and this will be able to apply to all algorithms using the magnitude of the correlation value of the signal so as to utilize a concept of Fig. 2A.

The second delay unit 1104 delays $c(n)$ as the signal received from the correlation value calculator 1103 during minimum $T_g$, and the adder 1105 obtains a difference between $c(n+N)$ as a signal received from the second delay unit 1104 and $c(n)$.

The moving window sum unit 1106 calculates sum of the output signals of the adder 1105 during the minimum guard interval.

The minimum value or maximum value point searcher 1107 can use a comparator in order to search the minimum value or the maximum value among the values of sum in the moving window sum unit 1106, and compares values of the minimum guard interval accumulator 1106 during $T_u$ and maximum $T_g$, and finds out a point where the minimum value or the maximum value is represented. This can be represented as the following equation (9) for the minimum value and as the following equation (10) for the maximum value.

$$Min\left[\sum_{k=\theta}^{\theta+C-1}\{c(n+k+N)-c(n+k)\}\right] \quad \text{n=0,1, } \bullet\bullet\bullet \text{ N+G-1} \quad \text{Eq. (9)}$$

$$Min\left[\sum_{k=\theta}^{\theta+C-1}\{c(n+k)-c(n+k+N)\}\right] \quad \text{n=0,1,} \quad \bullet\bullet\bullet \text{ N+G-1} \qquad \text{Eq. (10)}$$

Such method is repeatedly performed over two times, and a mean for such obtained OFDM symbol synchronization values is computed, to thus estimate its position.

The guard interval remover 1108 performs a function of inputting a signal corresponding to the useful OFDM symbols, the signal being provided from a signal preceding by minimum $T_g$, to the FFT circuit 1109, at a point of the minimum value or the maximum value searched in the minimum or maximum value point searcher 1107.

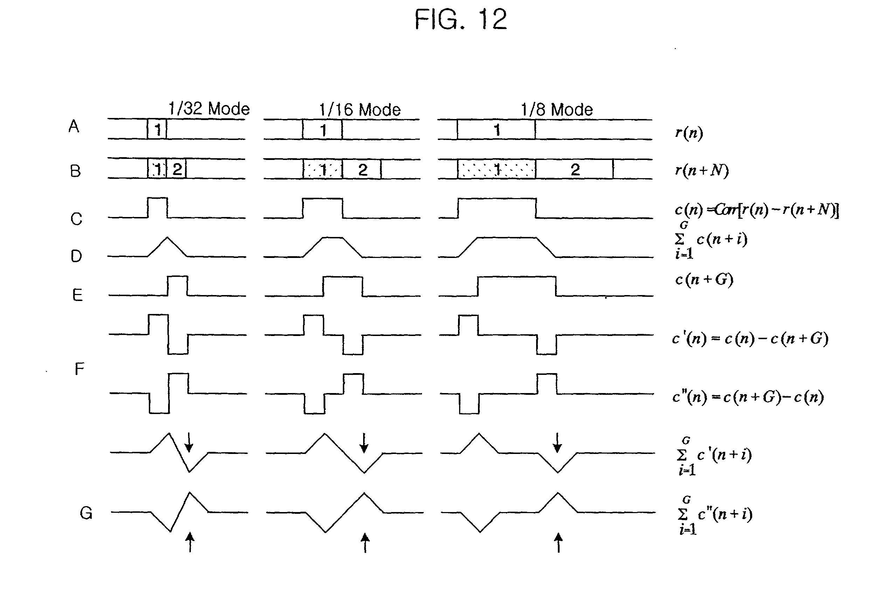

Fig. 12 is a graph of one embodiment showing an output of each block shown in Fig. 11.

In the conventional OFDM system, a length of a guard interval should be known in advance in all methods for the symbol synchronization. If a size of the guard interval transmitted in the receiver system is not known previously, there is a problem that the guard interval cannot be removed.

Among symbol synchronization algorithms using a signal coincidence between the conventional useful OFDM symbols and the guard interval, a use signal characteristic of algorithm using a correlation of a signal becomes D shown in Fig. 12. In other words, there is a problem that an exactness in the symbol synchronization remarkably falls. Further, even though the start point is found out, the guard interval cannot be removed if a sort of the guard interval cannot be known.

Therefore, the symbol synchronization methods up to now cannot be used in the system having several kinds of guard intervals. However, if utilizing G of Fig. 12, it will be valid the symbol synchronization even though only a length of the minimum guard interval in the system is known.

As shown in the drawing, "A" represents an output of the analog digital converter 1101, and "B" indicates an output of the first delay unit 1102.

"C" indicates an output of the correlation value calculator 1103, and "D" represents an output of the conventional moving window sum unit using an output of the correlation value calculator when it is provided information of the minimum guard interval length at a systematic initiation under a state that a sort of the guard interval is not known. As shown in the drawing, it can be known that the exact symbol synchronization is impossible.

"E" represents an output of the second delay unit 1104 and F indicates an output of the adder 1105.

"G" provides an output of the moving window sum unit 1106. In a case of using $c'(n)$, the minimum value detector is used in the symbol synchronization position detector, and in a case of using $c''(n)$, the maximum value detector is used therein.

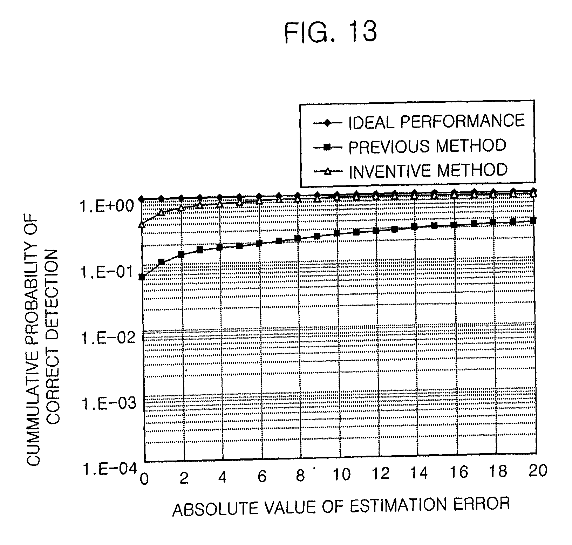

Fig. 13 is a graph of one embodiment provided by comparing the inventive OFDM symbol synchronization method and the conventional OFDM symbol synchronization method under such a state that it is not known a sort of guard intervals.

In a performance evaluation, it was used the transmission mode that a length of the guard interval in the DVB-T system is 1/16 of the useful OFDM symbols, and in channel it was used AWGN (Added White Gaussian Noise) of 15dB.

Herewith, when under the above environment, the symbol synchronization is performed in the receiver system without information for the guard interval of the transmission mode, the performances between the existing methods and the inventive method are compared with each.

A width axis represents an absolute value of an estimation error, and a length axis indicates cumulative probability of correct detection. The more the estimation probability becomes near to 1 within a small estimation error as an ideal performance, the more the performance becomes prominent.

As shown in the drawing, it can be known that the inventive OFDM symbol synchronization method has much more prominent performance in comparison with the conventional symbol synchronization method.

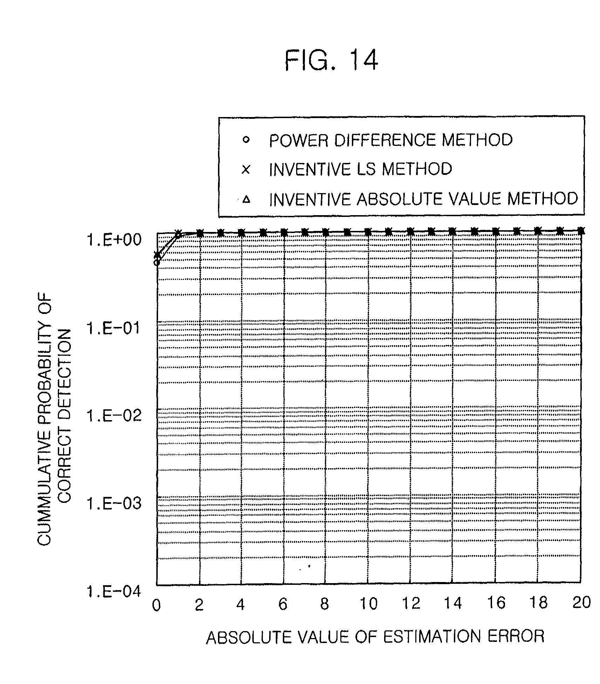

Fig. 14 is a graph of one embodiment provided by comparing the inventive OFDM symbol synchronization method and an OFDM symbol synchronization method using an absolute value of an electricity difference.

In the performance evaluation, the transmission mode of EUREKA147 was used, and in channel, AWGN of 15dB was used.

Herewith, under the above environment, it is compared the performance of the symbol synchronization in a method of using equations (4) and (5) provided in the existing present invention and in a conventional method of using an absolute value of electricity difference.

A width axis represents an absolute value of an estimation error, and a length axis indicates cumulative probability of correct detection.

As shown in the drawing, it can be known that the performance in the inventive OFDM symbol synchronization method does not fall even with a simplified embodiment, in comparison with the symbol synchronization method using the absolute value of the electricity difference.

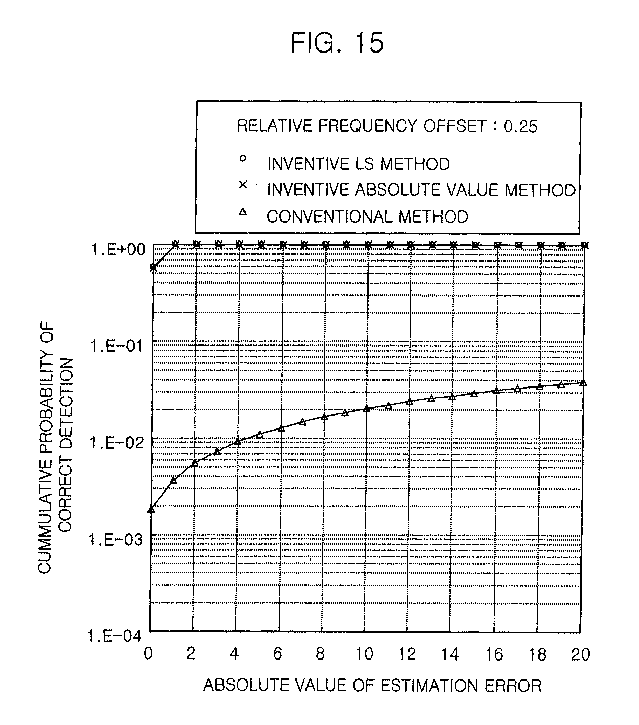

Fig. 15 is a graph of one embodiment provided by comparing the inventive OFDM symbol synchronization method and a conventional OFDM symbol synchronization method having an influence of frequency offset under such a state that a relative frequency offset for a subcarrier spacing exists remain.

In the performance evaluation, it was used the transmission mode that a length of the guard interval in the DVB-T system is 1/32 of the useful OFDM symbols, and in channel it was used AWGN of 15dB, and receipt frequency offset in the receiver system is 0.25. The frequency offset is a relative value to a carrier spacing.

A width axis represents an absolute value of the estimation error, and a length axis indicates cumulative probability of correct detection.

As shown in the drawing, the symbol synchronization is impossible in the OFDM symbol synchronization methods which are not considered for the existing frequency offset in case that there exists remain the frequency offset, meantime, in the OFDM symbol synchronization method provided in the present invention, it is valid to perform a reliable operation even in case that there exists remain the frequency offset.

The inventive method as the above-mentioned can be stored in the record medium capable of being read through a computer which is embodied by a program, the record medium being, e.g., a CDROM, a RAM, a ROM, a floppy disk, a hard disk, an optical magnetic disk, etc.

As afore-mentioned, in accordance with the present invention, there is an effect that a reliable OFDM symbol synchronization result can be obtained by finding out a start point of useful OFDM symbols for the sake of an FFT used for a demodulation in an OFDM receiver by using the magnitude of an input signal and a correlation value, even in case that there exists a synchronization error such as a carrier frequency offset or a sampling frequency offset etc.

In addition, in the invention there is an effect that a complication by hardware is lessened and a computation time is shortened, by using a simplified system such as an absolute value calculator, a 1bit shift and an adder etc.

Further, in the invention, the start point of the useful OFDM symbols for the FFT used for the demodulation in the OFDM receiver is found out regardless of a sort of guard intervals, thereby there is an effect that the symbol synchronization can be gained without an additive preceding operation of searching for a sort of the guard interval, even in a system having several kinds of guard intervals.

There also is an effect of lessening the memory allocation and calculation amount by applying an accumulation during a minimum $T_g$.

Additionally, there is an effect of efficiently utilizing the invention in a high speed data transmission which is essentially required for the next generation mobile communication service, by shortening the computation time and reducing the calculation amount.

It will be apparent to those skilled in the art that various modifications and variations can be made in the present invention without deviating from the spirit or scope of the invention. Thus, it is intended that the present invention cover the modifications and variations of this invention provided they come within the scope of the appended claims and their equivalents.

**Claims**

1. An apparatus for synchronizing a symbol of an OFDM (orthogonal frequency division multiplexing) receiver, in which an FFT window position of an OFDM system is restored, said apparatus comprising:

    a signal magnitude calculator for calculating a magnitude of an applied input complex signal;
    a first delay unit for delaying a signal received from the signal magnitude calculator during a duration of a useful OFDM symbol $T_u$;
    a first adding unit for gaining a difference value for the magnitude between the signal delayed by the first delay unit and the input complex signal;
    an absolute value calculator for gaining an absolute value of the signal received from the first adding unit;
    a second delay unit for delaying the signal received from the absolute value calculator during a duration of a minimum guard interval $T_g$;
    a second adding unit for obtaining a difference value of the signals respectively received from the second delay unit and the absolute value calculator;
    a moving window sum unit for calculating sum of the signals received from the second adding unit during the minimum $T_g$;
    a searching unit for comparing values of the accumulating unit during $T_u$ and a maximum $T_g$, and searching for a predetermined point; and
    a guard interval removing unit for removing the guard interval by using the searched position.

2. The apparatus as recited in claim 1, wherein said signal magnitude calculator includes:

a first absolute value calculating block for gaining an absolute value of a real part of the input complex signal;
a second absolute value calculating block for obtaining an absolute value of an imaginary part of the input complex signal;
a comparing block for comparing the magnitude of the signals respectively received from the first absolute value calculating block and the second absolute value calculating block;
a first shift block for converting a value for a small signal among the signals compared by the comparing block into $\frac{1}{2}$;
a second shift block for converting the value for the signal received from the 1bit shift block into $\frac{1}{2}$;
a third shift block for converting the value for the signal received from the 2bit shift block into $\frac{1}{2}$; and
a third adding block for individually adding up great signals among the signals compared by the comparing block, the signals received from the first shift block, and the signals received from the third shift block, and subtracting the signal received from the second shift block.

3. The apparatus as recited in claim 1 or 2, wherein said signal magnitude calculator calculates the magnitude of the input complex signal by the following equation as:

$$I(n) = |y(n)| = L + (0.5 \times S) - (0.25 \times S) + (0.125 \times S),$$

$I(n)$ being for the magnitude of the signal, $y(n)$ being for the applied complex signal, $L$ being for the great signal among the signals compared by the comparing block, and $S$ being for the small signal among the signals compared by the comparing block.

4. The apparatus as recited in one of the preceding claims, wherein said signal magnitude calculator includes:

a first absolute value calculating block for gaining the absolute value of the real part of the input complex signal;
a second absolute value calculating block for obtaining the absolute value of the imaginary part of the input complex signal; and
a fourth adding block for adding up the signals respectively received from the first and second absolute value calculating blocks.

5. The apparatus as recited in claim 4, wherein said signal magnitude calculator calculates the magnitude of the input complex signal expressed as:

$$I(n) = |Re(n)| + |Im(n)|,$$

Re($n$)being for the real part of the complex signal, and Im($n$) being for the imaginary part of the complex signal.

6. The apparatus as recited in one of the preceding claims, wherein said searching unit compares the values of the moving window sum unit during $T_u$ and the maximum $T_g$, and searches for the point where a minimum value is represented.

7. The apparatus as recited in claim 6, wherein said searching unit repeatedly performs a searching operation for the position having the minimum value during $T_u$ and $T_g$ by a predetermined number in order to estimate a position of an exact minimum value point.

8. The apparatus as recited in claim 6, wherein said minimum value point searching operation is performed to find out the minimum value point on the basis of an equation as:

$$Min\left[ \sum_{k=\theta}^{\theta+G-1} \{d(n+k+G) - d(n+k)\} \right] \quad n=0,1, \bullet\bullet\bullet \; N+G-1$$

G being the maximum guard interval, and *d(n)* being an output of the absolute value calculator.

9. The apparatus as recited in claim 6, wherein said minimum value point searching operation is performed to find out the minimum value point on the basis of an equation as:

$$Min\left[\sum_{k=\theta}^{\theta+G-1}\{c(n+k)-c(n+k+G)\}\right] \quad \text{n=0,1, } \bullet\bullet\bullet \text{ N+G-1}$$

*c(n)* being for an output of the correlation value calculator.

10. The apparatus as recited in one of claims 1 to 5, wherein said searching unit compares the values of the moving window sum unit during $T_u$ and maximum $T_g$ and searches for a point where a maximum value is represented.

11. The apparatus as recited in claim 10, wherein said searching unit repeatedly performs a searching operation for the position having the maximum value during $T_u$ and $T_g$ by the predetermined number in order to estimate a position of an exact maximum value point.

12. The apparatus as recited in claim 10, wherein said maximum value point searching operation is performed to find out the maximum value point by an equation as:

$$Max\left[\sum_{k=\theta}^{\theta+G-1}\{d(n+k)-d(n+k+G)\}\right] \quad \text{n=0,1, } \bullet\bullet\bullet \text{ N+G-1.}$$

13. The apparatus as recited in claim 12, wherein said maximum value point searching operation is performed to find out the maximum value point by an equation as:

$$Max\left[\sum_{k=\theta}^{\theta+G-1}\{c(n+k+G)-c(n+k)\}\right] \quad \text{n=0,1, } \bullet\bullet\bullet \text{ N+G-1.}$$

14. The apparatus as recited in one of claims 1 to 5, wherein said guard interval removing unit gains a signal corresponding to the useful OFDM symbols, from a signal preceding by the minimum guard interval, at the point searched by the searching unit.

15. An apparatus for synchronizing a symbol of an OFDM (orthogonal frequency division multiplexing) receiver, in which an FFT window position of an OFDM system is restored, said apparatus comprising:

a first delay unit for delaying an applied input complex signal during a duration of a useful OFDM symbol $T_u$;
a correlation value calculator for gaining a correlation value between signals respectively received from the first delay unit and the input complex signal;
a second delay unit for delaying the signal received from the correlation value calculator during a duration of a minimum guard interval $T_g$;
an adding unit for gaining a difference value of the signals respectively received from the second delay unit and the correlation value calculator;
a moving window sum unit for accumulating the signals received from the adding unit during the minimum $T_g$;
a searching unit for comparing values of the moving window sum unit during the useful OFDM symbols interval and a maximum $T_g$, and searching for a predetermined point; and
a guard interval removing unit for removing a guard interval by using the searched position.

16. The apparatus as recited in claim 15, wherein said searching unit compares the values of the moving window sum

unit during $T_u$ and the maximum $T_g$, and searches for the point where a minimum value is represented.

17. The apparatus as recited in claim 16, wherein said searching unit repeatedly performs a searching operation for the position having the minimum value during $T_u$ and $T_g$ by a predetermined number in order to estimate a position of an exact minimum value point.

18. The apparatus as recited in claim 16, wherein said minimum value point searching operation is performed to find out the minimum value point on the basis of an equation as:

$$Min\left[\sum_{k=\theta}^{\theta+G-1}\{d(n+k+G)-d(n+k)\}\right] \quad n=0,1,\quad \bullet\bullet\bullet \quad N+G-1$$

G being the maximum guard interval, and d(n) being an output of the absolute value calculator.

19. The apparatus as recited in claim 16, wherein said minimum value point searching operation is performed to find out the minimum value point on the basis of an equation as:

$$Min\left[\sum_{k=\theta}^{\theta+G-1}\{c(n+k)-c(n+k+G)\}\right] \quad n=0,1,\quad \bullet\bullet\bullet \quad N+G-1$$

c(n) being for an output of the correlation value calculator.

20. The apparatus as recited in claim 15, wherein said searching unit compares the values of the moving window sum unit during $T_u$ and maximum $T_g$ and searches for a point where a maximum value is represented.

21. The apparatus as recited in claim 20, wherein said searching unit repeatedly performs a searching operation for the position having the maximum value during $T_u$ and $T_g$ by the predetermined number in order to estimate a position of an exact maximum value point.

22. The apparatus as recited in claim 20, wherein said maximum value point searching operation is performed to find out the maximum value point by an equation as:

$$Max\left[\sum_{k=\theta}^{\theta+G-1}\{d(n+k)-d(n+k+G)\}\right] \quad n=0,1,\quad \bullet\bullet\bullet \quad N+G-1.$$

23. The apparatus as recited in claim 20, wherein said maximum value point searching operation is performed to find out the maximum value point by an equation as:

$$Max\left[\sum_{k=\theta}^{\theta+G-1}\{c(n+k+G)-c(n+k)\}\right] \quad n=0,1,\quad \bullet\bullet\bullet \quad N+G-1.$$

24. The apparatus as recited in claim 15, wherein said guard interval removing unit gains a signal corresponding to the useful OFDM symbols, from a signal preceding by the minimum guard interval, at the point searched by the searching unit.

25. A method for synchronizing a symbol in an OFDM (orthogonal frequency division multiplexing) receiver, in which an FFT window position of an OFDM system is restored, said method comprising the steps of:

a) performing a calculation for the magnitude of an applied input complex signal;
b) delaying the signal calculated in said step a) during a duration of a useful OFDM symbol $T_u$;
c) gaining a difference value between the magnitude of the signal delayed in said step b) and the input signal, and obtaining its absolute value;
d) delaying the absolute value during a duration of a minimum guard interval $T_g$;
e) obtaining a difference value between the signal delayed in said step d) and the absolute value;
f) calculating sum of the difference values during the minimum $T_g$;
g) comparing the values of sum during $T_u$ and maximum $T_g$, and searching for a predetermined point; and
h) removing the guard interval by using the searched position.

26. The method as recited in claim 25, wherein said step a) includes the steps of:

a1) gaining an absolute value of a real part of the input complex signal;
a2) obtaining an absolute value of an imaginary part of the input complex signal;
a3) comparing the magnitude of the absolute values gained in the steps a1) and a2);
a4) converting a value for a small signal among the compared signals into $\frac{1}{2}$;
a5) converting the value for the signal converted in the step a4) into $\frac{1}{2}$;
a6) converting the value for the signal converted in the step a5) into $\frac{1}{2}$; and
a7) individually adding up great signals among the compared signals and the signals generated in the steps a4) and a6), and subtracting the signal generated in the step a5).

27. The method as recited in claim 25, wherein said step a) includes the steps of:

a1) gaining the absolute value of the real part of the input complex signal;
a2) obtaining the absolute value of the imaginary part of the input complex signal; and
a3) adding up the signals generated in the steps a1) and a2).

28. A method for synchronizing a symbol in an OFDM (orthogonal frequency division multiplexing) receiver, in which an FFT window position of an OFDM system is restored, said method comprising the steps of:

a) delaying an applied input complex signal during $T_u$;
b) gaining a correlation value between the signal generated in the first step and the input complex signal;
c) delaying the correlation value during a minimum guard interval $T_g$;
d) gaining a difference value between the signal delayed in the third step and the correlation value;
e) calculating sum of the difference values during the minimum guard interval $T_g$;
f) comparing the values of sum during $T_u$ and the maximum guard interval $T_g$, and searching for a predetermined point; and
g) removing the guard interval by using the searched position.

29. A computer readable recording medium storing instructions for executing a method for synchronizing a symbol in an OFDM (orthogonal frequency division multiplexing) symbol synchronization apparatus to restore an FFT window position of an OFDM system, the OFDM symbol synchronization apparatus having a microprocessor, said method comprising the steps of:

a) performing a calculation for the magnitude of an applied input complex signal;
b) delaying the signal calculated in said step a) during a duration of a useful OFDM symbol $T_u$;
c) gaining a difference value between the magnitude of the signal delayed in said step b) and the input signal, and obtaining its absolute value;
d) delaying the absolute value during a duration of a minimum guard interval $T_g$;
e) obtaining a difference value between the signal delayed in said step d) and the absolute value;
f) calculating sum of the difference values during the minimum $T_g$;
g) comparing the values of sum during $T_u$ and a maximum $T_g$, and searching for a predetermined point; and
h) removing the guard interval by using the searched position.

30. A computer readable recording medium storing instructions for executing a method for synchronizing a symbol in an OFDM (orthogonal frequency division multiplexing) symbol synchronization apparatus to restore an FFT window position of an OFDM system, the OFDM symbol synchronization apparatus having a microprocessor, said method comprising the steps of:

a) delaying an applied input complex signal during $T_u$;
b) gaining a correlation value between the signal generated in the first step and the input complex signal;
c) delaying the correlation value during a minimum guard interval $T_g$;
d) gaining a difference value between the signal delayed in the third step and the correlation value;
e) calculating sum of the difference values during minimum guard interval $T_g$;
f) comparing the values of sum during $T_u$ and the maximum guard interval $T_g$, and searching for a predetermined point; and
g) removing the guard interval by using the searched position.

# FIG. 1

# FIG. 2A

r$_i$(n)

0      i      N+G

r$_i$(n+N)

N      i+N      2N+G

↓ CORRELATION

MOVING
WINDOW SUM

G sum
G sum

0      i      N
1

(a)

# FIG. 2B

r$_i$(n)

0      i      N+G

r$_i$(n+N)

N      i+N      2N+G

↓ SUBTRACT

MOVING
WINDOW SUM

G sum
G sum

0      i      N
1

(b)

# FIG. 3

FIG. 4

FIG. 5

FIG. 6

FIG. 7

REAL PART ⟶ | MULTIPLIER |

IMAGINARY PART ⟶ | MULTIPLIER |

(+) ⟶ | SQUARE ROOT CALCULATOR | ⟶

FIG. 8

FIG. 9

REAL PART → | ABSOLUTE VALUE CALCULATOR | ⟍628

IMAGINARY PART → | ABSOLUTE VALUE CALCULATOR | ⟍629

630

**FIG. 10**

A — $l(n)$

B

C — $d(n) = |l(n) - l(n+N)|$

D — $\displaystyle\sum_{i=1}^{G} d(n+i)$

E — $d(n+G)$

F — $d'(n) = d(n) - d(n+G)$

F — $d''(n) = d(n+G) - d(n)$

G — $\displaystyle\sum_{i=1}^{G} d'(n+i)$

G — $\displaystyle\sum_{i=1}^{G} d''(n+i)$

1/32 Mode    1/16 Mode    1/8 Mode

$l(n+N)$

FIG. 11

# FIG. 12

## FIG. 13

# FIG. 14

Legend:
- ○ POWER DIFFERENCE METHOD
- × INVENTIVE LS METHOD
- △ INVENTIVE ABSOLUTE VALUE METHOD

Y-axis: CUMMULATIVE PROBABILITY OF CORRECT DETECTION (1.E+00, 1.E-01, 1.E-02, 1.E-03, 1.E-04)

X-axis: ABSOLUTE VALUE OF ESTIMATION ERROR (0, 2, 4, 6, 8, 10, 12, 14, 16, 18, 20)

# FIG. 15

RELATIVE FREQUENCY OFFSET : 0.25

- ○ INVENTIVE LS METHOD
- × INVENTIVE ABSOLUTE VALUE METHOD
- △ CONVENTIONAL METHOD